# EUROPÄISCHE PATENTANMELDUNG

(11) **EP 3 569 875 A1**
(43) Veröffentlichungstag der Anmeldung: **20.11.2019**
(21) Anmeldenummer: 18171983.2
(22) Anmeldetag: 14.05.2018
(51) Int. Cl.: F16B 13/02, F16B 13/14

(54) **ANKERBOLZEN ZUR VERWENDUNG IN VERBUND-MÖRTEL UND BAUGRUPPE MIT EINER MIT VERBUND-MÖRTEL AUFGEFÜLLTEN ÖFFNUNG UND EINEM ANKERBOLZEN**

(71) Anmelder: HILTI Aktiengesellschaft, 9494 Schaan (LI)
(72) Erfinder: Dierker, Sascha, 86504 Merching (DE)
(74) Vertreter: Hilti Aktiengesellschaft Corporate Intellectual Property

(57) **Zusammenfassung**

Es wird ein Ankerbolzen (10) zur Verwendung in Verbund-Mörtel angegeben, aufweisend einen Schaft (12) und einen sich an den Schaft (12) anschließenden Ankerabschnitt (14), der stirnseitig ein Einsteckende (16) aufweist, wobei der Ankerabschnitt (14) mehrere Konen (20) umfasst, die sich jeweils ausgehend vom Schaft (12) in Richtung zum Einsteckende (16) aufweiten, wobei die jeweiligen Konen (20) eine Länge entlang des Ankerabschnitts (14) haben, dadurch gekennzeichnet, dass die jeweilige Länge der Konen (20) vom Schaft (12) zum Einsteckende (16) hin abnimmt. Des Weiteren wird eine Baugruppe bestehend aus einer mit einem Verbund-Mörtel aufgefüllten Öffnung und einem Ankerbolzen (10) angegeben.

## Beschreibung

Die vorliegende Erfindung betrifft einen Ankerbolzen zur Verwendung in Verbund-Mörtel und eine Baugruppe bestehend aus einer mit einem Verbund-Mörtel aufgefüllten Öffnung und einem Ankerbolzen.

Ankerbolzen dienen zur Befestigung von schweren Lasten vorwiegend in Untergründen aus Beton. Aus dem Stand der Technik sind Ankerbolzen bekannt, die einen Befestigungsabschnitt umfassen, der konusförmige Erweiterungsabschnitte aufweist. Derartige Ankerbolzen werden im Stand der Technik zusammen mit radikalisch härtenden Mörteln verwendet, wobei selbst in gerissenen und/oder ungereinigten Bohrlöchern gute Lastwerte erreicht werden. Ein Befestigungssystem, das einen derartigen Ankerbolzen sowie einen entsprechenden radikalisch härtenden Mörtel umfasst, ist beispielsweise in der DE 102011 083 153 A1 beschrieben.

Derartige Ankerbolzen haben üblicherweise Konen mit gleicher Neigung, insbesondere gleichen Konuswinkeln, und identischen Durchmessern, sodass der Ankerbolzen im Wesentlichen identische Verjüngungen aufweist. Somit sind die Zug- und Druckspannungen eines in einem Untergrund gesetzten und belasteten Ankerbolzens gleichmäßig über die Mantelfläche des Ankerbolzens verteilt, unabhängig davon, wo die höchsten Zugbelastungen am Ankerbolzen auftreten. Dadurch kann es zu Spannungsbrüchen des Ankerbolzens vor Erreichen eines Untergrundversagens kommen.

Es ist somit eine Aufgabe der Erfindung, einen Ankerbolzen bereitzustellen, der hohe Lasten aufnehmen kann.

Diese Aufgabe wird erfindungsgemäß gelöst durch einen Ankerbolzen zur Verwendung in Verbund-Mörtel, aufweisend einen Schaft und einen sich an den Schaft anschließenden Ankerabschnitt, der stirnseitig ein Einsteckende aufweist, wobei der Ankerabschnitt mehrere Konen umfasst, die sich jeweils ausgehend vom Schaft in Richtung zum Einsteckende aufweiten, wobei die jeweiligen Konen eine Länge entlang des Ankerabschnitts haben, dadurch gekennzeichnet, dass die jeweilige Länge der Konen vom Schaft zum Einsteckende hin abnimmt.

Die Erfindung beruht auf der Erkenntnis, dass es hinsichtlich der Kraftverteilung vorteilhaft ist, wenn die höchsten Verbundspannungen in dem Verbund aus Untergrund, Verbund-Mörtel und Ankerbolzen am Grund der Öffnung, insbesondere dem Bohrlochgrund, entstehen, in das der Ankerbolzen eingesetzt wird. Der erfindungsgemäße Ankerbolzen hat den Vorteil, dass eine auf einen gesetzten Ankerbolzen einwirkende Kraft in eine große Fläche des Untergrunds eingeleitet werden kann. Dies wird dadurch bewirkt, dass die Verbundspannung aufgrund der unterschiedlichen Längen der Konen von einem Öffnungseingang, der dem Schaft des Ankerbolzens zugeordnet ist, zum Einsteckende des Ankerbolzens hin ansteigt. Mit anderen Worten weisen die Konen jeweils eine Länge auf, wobei die jeweilige Länge der Konen unterschiedlich ist, da der Konus, der dem Einsteckende zugeordnet ist, die geringste Länge aufweist, wohingegen der Konus, der dem Schaft zugeordnet ist, die größte Länge hat.

Gemäß einer Ausführungsform sind die Konen durch Gegenkonen miteinander verbunden, wobei sich die Gegenkonen jeweils ausgehend vom Einsteckende in Richtung zum Schaft aufweiten, insbesondere wobei die Gegenkonen und die Konen ineinander übergehen. Dadurch können ungewünschte Spannungsspitzen bei einer Belastung des Ankerbolzens vermieden werden. Die Konen und Gegenkonen sind demnach einstückig miteinander ausgebildet, insbesondere der gesamte Ankerabschnitt bzw. der gesamte Ankerbolzen.

Die Konen weiten sich in einem Mittelquerschnitt des Ankerabschnitts im Wesentlichen gleichmäßig in Bezug auf eine Rotationsachse des Ankerbolzens auf. Dadurch steigt die Spannung in einem sich aufweitenden Bereich des Ankerbolzens linear an.

Die Anfangsdurchmesser der Konen können in Richtung zum Einsteckende hin abnehmen oder konstant bleiben. Dadurch lässt sich die Spannungsverteilung im Ankerbolzen beeinflussen. Hierdurch ist die Wahrscheinlichkeit eines Elementversagens des erfindungsgemäßen Ankerbolzens sehr gering, da der Ankerbolzen im Bereich der höchsten Zugspannung, nämlich am Anbauende bzw. am Schaft, den größten Durchmesser bzw. die geringste Verjüngung aufweist. Daher hat der Ankerbolzen eine hohe Dauerfestigkeit gegen statische und dynamische Lasten. Des Weiteren können hohe Querkräfte übertragen werden. Vorzugsweise nimmt der jeweilige Anfangsdurchmesser der Konen zum Einsteckende hin ab.

Gemäß einer bevorzugten Ausführungsform ist ein Aufweitwinkel, unter dem sich ein Konus zum Einsteckende hin aufweitet, betragsmäßig größer oder gleich wie der Aufweitwinkel, unter dem sich der in Richtung zum Schaft anschließende Konus aufweitet. Insofern können die Aufweitwinkel der jeweiligen Konen vom Schaft zum Einsteckende jeweils größer werden. Die Konen können dadurch eine unterschiedliche Länge bei gleichem Außen- und/oder Anfangsdurchmesser aufweisen.

Die Konen können jeweils eine Oberfläche mit einer mittleren Rauigkeit (Rₐ) von weniger als 60 aufweisen, insbesondere weniger als 25, vorzugsweise kleiner gleich 12. Dadurch ist eine Haftung zwischen dem Ankerbolzen und einem Verbundmörtel möglichst gering, sodass eine Relativbewegung zum Brechen einer Mörtelhülse möglich ist. Die Verbindung zwischen einem ausgehärteten Verbund-Mörtel und dem Ankerbolzen ist somit eine formschlüssige Verbindung und keine stoffschlüssige. Dies ermöglicht ein Aufbrechen des den Ankerbolzen umgebenden Verbund-Mörtels, also der Mörtelhülse, wodurch hohe Lastwerte ermöglicht werden.

Vorzugsweise weist zumindest die Oberfläche der Konen eine Anti-Haft-Beschichtung auf. Dadurch ist eine Haftung bzw. stoffschlüssige Verbindung zwischen dem Ankerbolzen und einem Verbundmörtel weiter reduziert.

Die Oberfläche der Konen kann dabei galvanisch glanzvernickelt und/oder verchromt sein oder mit anderen Trenn- und/oder Gleitmitteln beschichtet sein, wie etwa ein wachsartiges, synthetisches Polymer, Polytetrafluorethylen, Silikonpolymer und dergleichen. Alternativ ist es möglich, die Oberfläche elektrochemisch zu glätten, beispielsweise mittels Elektropolieren.

Die Rauigkeit der Oberflächen der Gegenkonen ist vorzugsweise größer als die Rauigkeit der Oberflächen der Konen. Dadurch wirken die Gegenkonen als Verdrehsicherung beim Aufbringen eines Anspannmoments. Beispielsweise hat die Oberfläche der Gegenkonen Einschnitte oder Überstände.

An dem Einsteckende kann eine Einführgeometrie vorgesehen sein, insbesondere eine Teilkugel oder eine Schräge. Dies hat den Vorteil, dass ein Einführen des Ankerbolzens in eine Öffnung, beispielsweise ein Bohrloch, vereinfacht ist. Insbesondere wird vermieden, dass sich der Ankerbolzen in der Öffnung verkantet oder an einer Öffnungswand hängen bleibt.

Gemäß einer Ausführungsform besteht der Ankerbolzen aus Stahl oder aus einem Kunststoff, insbesondere aus einem faserverstärkten Kunststoff. Bei dem Kunststoff kann es sich um einen Duroplast oder um einen Thermoplast handeln. Die Fasern können aus Carbon, Glas, Stahl und/oder Aramid sein. Die genannten Materialien haben eine Zugfestigkeit, die zwischen 300 N/mm² und 1300 N/mm² liegt. Insofern werden die gewünschten Eigenschaften des Ankerbolzens erreicht.

Die Länge eines Konusbereichs nimmt beispielsweise vom Schaft zum Einsteckende hin ab. Ein Konusbereich besteht aus einem Gegenkonus und einem sich daran anschließenden Konus. Dadurch steigt eine Verbundspannung zwischen dem Ankerbolzen und einem Verbund-Mörtel vom Schaft zum Einsteckende hin. Die Wahrscheinlichkeit, dass der Ankerbolzen in der Nähe eines Bohrlochausgangs versagt, ist dadurch stark reduziert, wie bereits erläutert wurde.

Generell kann die jeweilige Länge der Gegenkonen vom Schaft zum Einsteckende hin zunehmen.

Sofern die jeweilige Länge eines Konusbereichs vom Schaft zum Einsteckende hin abnimmt, nimmt die jeweilige Länge der Gegenkonen vom Schaft zum Einsteckende hin weniger stark zu als die jeweilige Länge der Konen vom Schaft zum Einsteckende abnimmt.

Gemäß einer Ausführungsform sind die Konen als Gewinde mit abnehmender Steigung vom Schaft zum Einsteckende ausgeführt. Ein derartig gestalteter Ankerbolzen hat eine erhöhte Anzahl von Hinterschnitten, sodass ein (formschlüssiger) Verbund zwischen dem Ankerbolzen und einem Verbundmörtel besonders stabil ist. Durch die Ausgestaltung der Konen ist eine große Oberfläche geschaffen. Dies wirkt sich vorteilhaft auf die Lasteinleitung aus.

Der Schaft weist vorzugsweise an seinem vom Einsteckende abgewandten Ende eine Anschlussgeometrie auf, insbesondere ein Gewinde, beispielsweise ein Linksgewinde. Die Anschlussgeometrie dient der Befestigung von Lasten an dem Ankerbolzen und/oder als Verdrehsicherung beim Aufbringen eines Anspannmoments. Alternativ oder zusätzlich kann der Schaft auch Überstände oder Einschnitte aufweisen.

Die Aufgabe wird des Weiteren erfindungsgemäß gelöst durch eine Baugruppe bestehend aus einer mit einem Verbund-Mörtel aufgefüllten Öffnung und einem Ankerbolzen, der wie vorhergehend beschrieben ausgebildet ist. Der Ankerbolzen kann somit durch den Verbund-Mörtel zuverlässig in der Öffnung gehalten werden.

Der Verbund-Mörtel kann Duroplast- und/oder Thermoplast-Anteile umfassen.

Die Öffnung kann in einem mineralischen, mineralisch-organischen oder organischem Untergrund vorgesehen sein.

Der Ankerbolzen kann über seinen Ankerabschnitt in die Öffnung eingesteckt sein. Dadurch kann eine besonders zuverlässige Befestigung von Lasten an einem Untergrund, beispielsweise an einer Wand, erfolgen, wie zuvor schon beschrieben worden ist.

Weitere Vorteile und Merkmale der Erfindung ergeben sich aus der nachfolgenden Beschreibung und aus den nachfolgenden Zeichnungen, auf die Bezug genommen wird. In den Zeichnungen zeigen:
- Figur 1 einen erfindungsgemäßen Ankerbolzen,
- Figur 2 einen weiteren erfindungsgemäßen Ankerbolzen und
- Figur 3 eine erfindungsgemäße Baugruppe

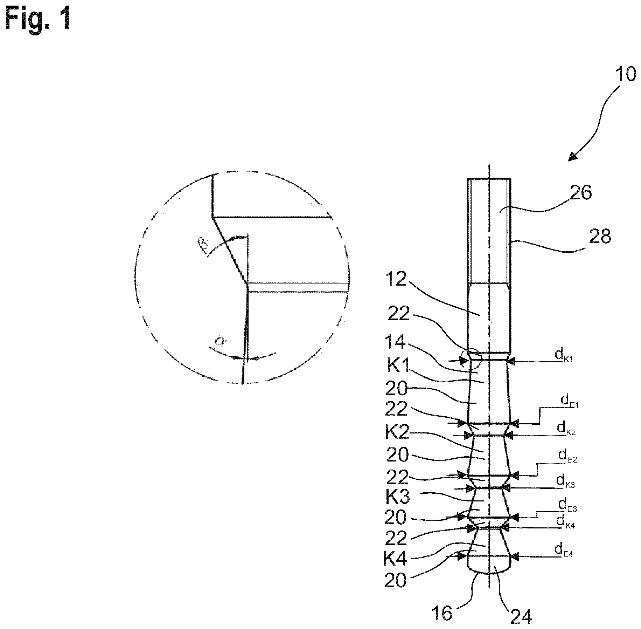

Figur 1 zeigt einen erfindungsgemäßen Ankerbolzen 10. Der Ankerbolzen 10 weist einen Schaft 12, insbesondere einen zylindrischen Schaft 12, und einen sich an den Schaft 12 anschließenden Ankerabschnitt 14 mit einem stirnseitigen Einsteckende 16 auf. Der Ankerbolzen 10 kann über seinen Ankerabschnitt 14 in eine Öffnung in einem Untergrund eingesteckt werden, die mit einem Verbund-Mörtel gefüllt sein kann. Bei dem Untergrund kann es sich um einen mineralischen, einen mineralisch-organischen oder einen organischen Untergrund handeln.

Der Ankerbolzen 10 besteht beispielsweise aus Stahl oder Kunststoff, insbesondere aus einem faserverstärkten Kunststoff. Vorzugsweise hat das Material des Ankerbolzens 10 eine Zugfestigkeit, die zwischen 300 N/mm² und 1300 N/mm² liegt und ein E-Modul größer als 10 000 MPa, besonders bevorzugt größer als 80 000 MPa.

Der Ankerabschnitt 14 des Ankerbolzens 10 umfasst mehrere Konen 20, insbesondere vier Konen 20, die sich jeweils ausgehend vom Schaft 12 in Richtung zum Einsteckende 16 hin aufweiten. Dabei können die Konen 20 als Gewinde mit abnehmender Steigung vom Schaft 12 zum Einsteckende 16 ausgeführt sein.

Die Konen 20 sind durch mehrere Gegenkonen 22 miteinander verbunden. Die Gegenkonen 22 weiten sich jeweils in eine Richtung vom Einsteckende 16 zum Schaft hin auf, sodass die Konen 20 und die Gegenkonen 22 ineinander übergehen. Ein Konus 20 und ein Gegenkonus 22 haben dabei im Übergang denselben Durchmesser.

Die Konen 20 und die Gegenkonen 22 sind folglich einstückig miteinander ausgebildet. Demnach ist der gesamte Ankerabschnitt 14 einstückig ausgebildet, insbesondere der gesamte Ankerbolzen 10.

Sowohl die Konen 20 als auch die Gegenkonen 22 weiten sich in einem Mittelquerschnitt des Ankerabschnitts 14 im Wesentlichen gleichmäßig in Bezug auf eine Rotationsachse des Ankerbolzens 10 auf.

Ein Konus 20 und ein Gegenkonus 22 bilden zusammen jeweils einen Konusbereich. Die Länge eines Konusbereichs nimmt vom Schaft 12 zum Einsteckende 16 hin ab, was nachfolgend noch näher erläutert wird.

Außerdem nimmt ein mittlerer Durchmesser des Ankerbolzens 10 vom Schaft 12 zum Einsteckende 16 hin ab, insbesondere nimmt die Größe der Verjüngungen, die jeweils zwischen einem Konus 20 und einem Gegenkonus 22 gebildet sind, zum Einsteckende 16 hin zu, also die Ausprägung der jeweiligen Verjüngungen. Dies bedeutet, dass der geringste Durchmesser eines Konusbereichs, der durch die jeweiligen Verjüngungen definiert ist, vom Schaft 12 zum Einsteckende 16 hin abnimmt. Die Verjüngungen sind insbesondere im Übergang von Gegenkonus 22 zu Konus 20 ausgebildet.

Eine Länge der jeweiligen Konen 20 entlang des Ankerabschnitts 14 nimmt vom Schaft 12 zum Einsteckende 16 hin ab, sodass der dem Schaft 12 zugeordnete Konus 20 am längsten ist und der dem Einsteckende 16 zugeordnete Konus 20 am kürzesten ist. Dadurch wird bei Belastung des Ankerbolzens 10 eine vorteilhafte Spannungsverteilung im Ankerbolzen 10 erreicht, wodurch der Ankerbolzen 10 sehr zuverlässig ist. Insbesondere ist eine Wahrscheinlichkeit, dass der Ankerbolzen 10 bei Belastung versagt, insbesondere bricht, gering.

Die Länge der Gegenkonen 22 kann dagegen vom Schaft 12 zum Einsteckende 16 zunehmen. Generell ist die Länge eines Gegenkonus 22, vom Schaft 12 zum Einsteckende 16 gesehen, größer oder gleich die Länge des vorherigen Gegenkonus 22.

Die Anfangsdurchmesser d_{K} der Konen 20, der der jeweiligen Verjüngung entspricht, nehmen in den gezeigten Ausführungsbeispielen in Richtung vom Schaft 12 zum Einsteckende 16 hin ab. Allerdings kann der Anfangsdurchmesser d_{K} der Konen 20 auch konstant sein. Die Anfangsdurchmesser d_{K} der Konen 20 entsprechen beispielsweise einem Kerndurchmesser des Ankerbolzens 10.

Die Enddurchmesser d_{E} der Konen 20 sind in den gezeigten Ausführungseispielen ebenfalls konstant, sie können jedoch auch in eine Richtung vom Schaft 12 zum Einsteckende 16 hin abnehmen oder zunehmen. Die Enddurchmesser d_{E} der Konen 20 definieren die Mantelfläche des Ankerbolzens 10 bzw. des Ankerabschnitts 14, weswegen sie auch als Außendurchmesser bezeichnet werden können.

Am Einsteckende 16 des Ankerabschnitts 14 ist eine Einführgeometrie 24 vorgesehen, die in der gezeigten Ausführungsform als Teilkugel ausgebildet ist. Die Einführgeometrie 24 erleichtert das Einführen des Ankerbolzens 10 in eine Öffnung, beispielsweise ein Bohrloch.

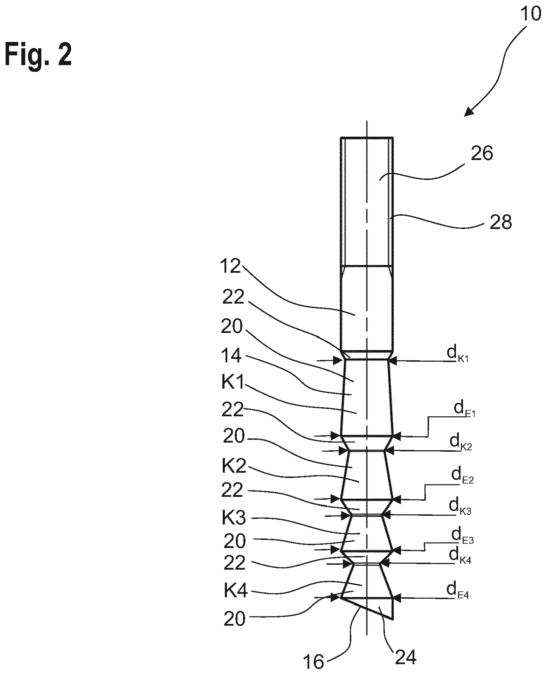

In Figur 2 ist eine weitere Ausführungsform dargestellt, die sich von der in Figur 1 dargestellten Ausführungsform lediglich durch die Form der Einführgeometrie 24 unterscheidet, und zwar ist die Einführgeometrie 24 in dieser Ausführungsform als Schräge ausgebildet.

Generell kann die Länge L der Konen 20 entlang dem Ankerabschnitt 14 bei einem Ankerbolzen 10 mit vier Konen 20 wie folgt aufgeteilt sein:
Der erste Konus K1, der am nächsten zum Schaft 12 angeordnet ist, hat vorzugsweise eine Länge zwischen 13 und 15 mm, der in Richtung zum Einsteckende 16 hin nächste Konus K2 hat vorzugsweise eine Länge zwischen 10 und 12 mm, der nächste an den Konus K2 anschließende Konus K3 hat vorzugsweise eine Länge zwischen 7 und 9 mm und der Konus K4, der am nächsten zum Einsteckende 16 angeordnet ist, hat vorzugsweise eine Länge zwischen 4 und 6 mm.

Gemäß einer alternativen Ausführungsform können die Konen 20 folgende Längen aufweisen:
K1: 13 bis 15 mm
K2: 9 bis 10 mm
K3: 6 bis 7 mm
K4: 3 bis 4 mm

Die Länge der Gegenkonen 22 kann dagegen vom Schaft 12 zum Einsteckende 16 hin zunehmen, wie bereits erläutert wurde.

Ein Aufweitwinkel α, unter dem sich ein Konus 20 zum Einsteckende 16 hin aufweitet, ist betragsmäßig kleiner oder gleich wie der Aufweitwinkel β, unter dem sich der in Richtung zum Schaft 12 anschließende Konus 22 aufweitet. Im gezeigten Ausführungsbeispiel nehmen die Aufweitwinkel α zum Einsteckende 16 hin zu, sodass α₁ < α₂ < α₃ < α₄ (α₁ entspricht dem Winkel von Konus K1 zu Anfangsdurchmesser d_{k,1}, α₂ entsprechend zu d_{k,2}, usw.).

Die Aufweitwinkel β der Gegenkonen 22 nehmen ebenfalls vom Schaft 12 zum Einsteckende 16 hin zu. Alternativ können die Winkel β jedoch auch abnehmen oder gleich sein.

Um ein Element an dem Ankerbolzen 10 befestigen zu können, weist der Schaft 12 eine Anschlussgeometrie 26 auf, die insbesondere ein Gewinde 28 umfasst.

Eine Haftung zwischen den Konen 20 des Ankerbolzens 10 und einem Untergrund soll möglichst gering sein, sodass beispielsweise eine stoffschlüssige Verbindung vermieden wird. Daher weisen die Konen 20 vorzugsweise jeweils eine Oberfläche mit einer mittleren Rauigkeit Rₐ von weniger als 60, insbesondere weniger als 25, besonders bevorzugt kleiner gleich 12 auf. Um die Haftung weiter zu reduzieren, kann zumindest die Oberfläche der Konen 20 alternativ oder zusätzlich eine Anti-Haft-Beschichtung aufweisen.

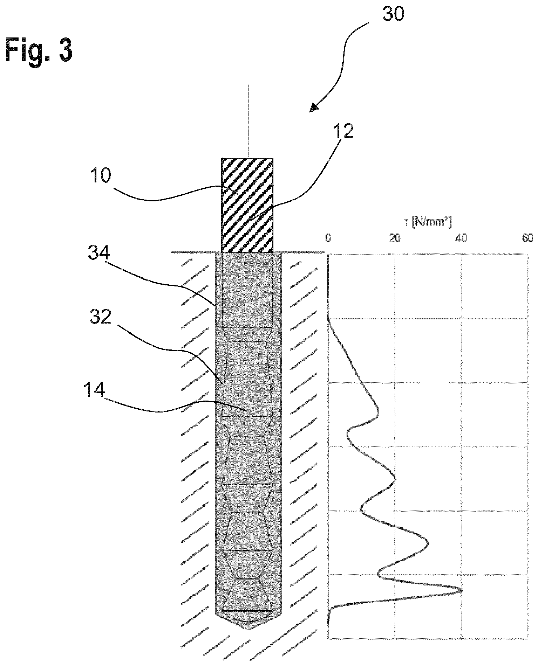

Figur 3 zeigt eine erfindungsgemäße Baugruppe 30 bestehend aus einem Ankerbolzen 10 und einer mit einem Verbund-Mörtel 32 aufgefüllten Öffnung 34, insbesondere einem Bohrloch. Bei dem Verbund-Mörtel 32 handelt es sich zum Beispiel um eine aushärtbare organische oder anorganische Mörtelmasse.

Der Ankerbolzen 10 ist über seinen Ankerabschnitt 14 in die Öffnung 34 eingesteckt. Der Schaft 12 steht aus der Öffnung 34 heraus und dient zur Befestigung von Lasten.

Die Öffnung 34 ist vorzugsweise ein zylindrisches oder konisches Loch, das beispielsweise mittels Hammerbohren oder Diamantbohren hergestellt worden ist. Zudem kann die Innenwandung der Öffnung 34 rau sein und/oder Hinterschnitte aufweisen. Dadurch verbindet sich der Verbund-Mörtel 32 besonders gut mit dem Untergrund, wodurch auch eine zuverlässige Befestigung des Ankerbolzens 10 begünstigt wird.

Neben der Baugruppe 30 ist ein Diagramm dargestellt, das beispielhaft die Spannungsverteilung in dem Ankerbolzen 10 veranschaulicht, wenn dieser in die mit dem Verbund-Mörtel 32 aufgefüllte Öffnung 34 eingesteckt ist und entsprechende Lasten wirken. Insgesamt wirkt über die gesamte Einbindelänge eine spezifische Spannung, wobei die auf den Ankerbolzen 10 wirkende Zugspannung bei einem einfachen Ankerbolzen 10, also z.B. einer Gewindestange mit konstanter Steigung vom Schaft 12 zum Einsteckende 16 (im Wesentlichen konstant) abnehmen würde.

Aus dem Diagramm ist erkennbar, dass eine Verbundspannung vom Schaft 12 zum Einsteckende 16 hin insgesamt betrachtet ansteigt, wobei die höchste Verbundspannung nahe dem Einsteckende 16 auftritt. Somit wird eine große Fläche im Untergrund aktiviert.

Gleichzeitig wird aufgrund der gewählten Durchmesser, insbesondere dem kontinuierlichen Anstieg der Durchmesser der Verjüngungen zum Schaft 12 hin, ein Elementversagen des Ankerbolzens 10 vermieden.

Im Bereich der Verjüngungen, das heißt im Bereich des Übergangs von einem Konus 20 auf einen Gegenkonus 22, nimmt die Spannung jeweils ab.

## Patentansprüche

1. Ankerbolzen (10) zur Verwendung in Verbund-Mörtel (32), aufweisend einen Schaft (12) und einen sich an den Schaft (12) anschließenden Ankerabschnitt (14), der stirnseitig ein Einsteckende (16) aufweist, wobei der Ankerabschnitt (14) mehrere Konen (20) umfasst, die sich jeweils ausgehend vom Schaft (12) in Richtung zum Einsteckende (16) aufweiten, wobei die jeweiligen Konen (20) eine Länge entlang des Ankerabschnitts (14) haben, **dadurch gekennzeichnet, dass** die jeweilige Länge der Konen (20) vom Schaft (12) zum Einsteckende (16) hin abnimmt.

2. Ankerbolzen (10) nach Anspruch 1, **dadurch gekennzeichnet, dass** die Konen (20) durch Gegenkonen (22) miteinander verbunden sind, wobei sich die Gegenkonen (22) jeweils ausgehend vom Einsteckende (16) in Richtung zum Schaft (12) aufweiten, insbesondere wobei die Gegenkonen (22) und die Konen (20) ineinander übergehen.

3. Ankerbolzen (10) nach Anspruch 1 oder 2, **dadurch gekennzeichnet, dass** sich die Konen (20) in einem Mittelquerschnitt des Ankerabschnitts (14) im Wesentlichen gleichmäßig in Bezug auf eine Rotationsachse des Ankerbolzens (10) aufweiten.

4. Ankerbolzen (10) nach einem der vorhergehenden Ansprüche, **dadurch gekennzeichnet, dass** die Anfangsdurchmesser (d_{K}) der Konen (20) in Richtung zum Einsteckende (16) hin abnehmen oder konstant bleiben.

5. Ankerbolzen (10) nach einem der vorhergehenden Ansprüche, **dadurch gekennzeichnet, dass** ein Aufweitwinkel (α), unter dem sich ein Konus (20) zum Einsteckende (16) hin aufweitet, betragsmäßig größer oder gleich ist wie der Aufweitwinkel (α), unter dem sich der in Richtung zum Schaft (12) anschließende Konus (20) aufweitet.

6. Ankerbolzen (10) nach einem der vorhergehenden Ansprüche, **dadurch gekennzeichnet, dass** die Konen (20) jeweils eine Oberfläche mit einer mittleren Rauigkeit (Rₐ) von weniger als 60 aufweisen, insbesondere weniger als 25, vorzugsweise kleiner gleich 12.

7. Ankerbolzen (10) nach einem der vorhergehenden Ansprüche, **dadurch gekennzeichnet, dass** zumindest die Oberfläche der Konen (20) eine Anti-Haft-Beschichtung aufweist.

8. Ankerbolzen (10) nach einem der Ansprüche 6 bis 7, **dadurch gekennzeichnet, dass** die Rauigkeit der Oberflächen der Gegenkonen (22) größer ist als die Rauigkeit der Oberflächen der Konen (20).

9. Ankerbolzen (10) nach einem der vorhergehenden Ansprüche, **dadurch gekennzeichnet, dass** an dem Einsteckende (16) eine Einführgeometrie (24) vorgesehen ist, insbesondere eine Teilkugel oder eine Schräge.

10. Ankerbolzen (10) nach einem der vorhergehenden Ansprüche, **dadurch gekennzeichnet, dass** der Ankerbolzen (10) aus Stahl oder aus einem Kunststoff besteht, insbesondere wobei der Ankerbolzen (10) aus einem faserverstärkten Kunststoff besteht.

11. Ankerbolzen (10) nach einem der vorhergehenden Ansprüche, **dadurch gekennzeichnet, dass** die Länge eines Konusbereichs vom Schaft (12) zum Einsteckende (16) hin abnimmt, wobei ein Konusbereich aus einem Gegenkonus (22) und einem sich daran anschließenden Konus (20) besteht.

12. Ankerbolzen (10) nach einem der vorhergehenden Ansprüche, **dadurch gekennzeichnet, dass** die Konen (20) als Gewinde mit abnehmender Steigung vom Schaft (12) zum Einsteckende (16) ausgeführt sind.

13. Ankerbolzen (10) nach einem der vorhergehenden Ansprüche, **dadurch gekennzeichnet, dass** der Schaft (12) an seinem vom Einsteckende (16) abgewandten Ende eine Anschlussgeometrie (26) aufweist, insbesondere ein Gewinde (28).

14. Baugruppe (30) bestehend aus einer mit einem Verbund-Mörtel (32) aufgefüllten Öffnung (34) und einem Ankerbolzen (10) nach einem der vorhergehenden Ansprüche.

15. Baugruppe (30) nach Anspruch 14, **dadurch gekennzeichnet, dass** der Ankerbolzen (10) über seinen Ankerabschnitt (14) in die Öffnung (34) eingesteckt ist.
